# EUROPÄISCHE PATENTSCHRIFT

(11) **EP 2 382 856 B1**
(45) Veröffentlichungstag und Bekanntmachung des Hinweises auf die Patenterteilung: **01.01.2014**
(21) Anmeldenummer: 11006301.3
(22) Anmeldetag: 03.11.2006
(51) Int. Cl.: A01F 25/18, A01D 43/10, B02C 4/08, B02C 4/30

(54) **Zerkleinerungseinrichtung**
Comminuting device
Dispositif broyeur

(30) Priorität: 04.11.2005 DE 102005053092
(43) Veröffentlichungstag der Anmeldung: 02.11.2011
(62) Teilanmeldung aus: 06807730.4
(73) Patentinhaber: Deere & Company European Office, 68163 Mannheim (DE)
(72) Erfinder: Ottersbach, Hans, 51580 Reichshof-Erdingen (DE)
(74) Vertreter: Holst, Sönke

(56) Entgegenhaltungen:
- DE-A1- 10 151 246
- DE-U1- 20 201 979

## Beschreibung

Die Erfindung betrifft eine Zerkleinerungseinrichtung ("Megacracker") für Erntegut, enthaltend zwei gegenläufig antreibbare Zerkleinerungswalzen, welche jeweils in Axialrichtung eine gewellte Mantelfläche aufweisen und ineinandergreifend angeordnet sind, wobei die Wellenflanken mindestens einer Zerkleinerungswalze im Wesentlichen radial verlaufende Einkerbungen mit variierendem Querschnitt und einer Schneidkante aufweisen.

Eine Nachzerkleinerungseinrichtung der eingangs genannten Art ist aus der DE 101 51 246 B4 bekannt. Nachzerkleinerungseinrichtungen werden in Verbindung mit von einem Schlepper gezogenen oder selbstfahrenden Feldhäckslern eingesetzt. In einem Feldhäcksler wird Erntegut wie Gras, Getreide oder Mais in ein Schneidwerkzeug eingezogen und durch Schneidvorrichtungen wie etwa eine Messertrommel oder ein Scheibenrad in kleine Stücke geschnitten. Das zerschnittene Erntegut wird dann über einen Auswurfkanal in einen Vorratsbehälter gefördert, zum Beispiel einen parallel mit dem Feldhäcksler fahrenden Anhänger. In dieser Anordnung wird in der Regel im Auswurfkanal hinter den Schneidvorrichtungen eine Nachzerkleinerungseinrichtung vorgesehen, um das Erntegut weiter zu zerkleinern. Ferner kann die Nachzerkleinerungseinrichtung dazu dienen, im Erntegut enthaltene Körner aufzubrechen.

Die aus der DE 101 51 246 B4 bekannte Nachzerkleinerungseinrichtung zeigt eine hervorragende Zerkleinerungswirkung in Bezug auf zugeführtes Mahlgut unterschiedlicher Art. Allerdings kommt es im Betrieb der Einrichtung gelegentlich zu Störfällen, welche den Arbeitsablauf unterbrechen.

DE 202 01 979 U1 beschreibt einen Zerkleinerer mit zwei Walzen mit wellenförmigen Profilen, die ineinander eingreifen. Die Seitenflanken der kegelförmigen Elemente, aus denen sich der Zerkleinerer aufbaut, sind mit einer wellenförmigen Morphologie ausgestattet.

Vor diesem Hintergrund war es Aufgabe der vorliegenden Erfindung, eine Zerkleinerungseinrichtung für Erntegut bereitzustellen, welche eine gute Zerkleinerungsleistung und hohe Robustheit aufweist.

Diese Aufgabe wird durch eine Zerkleinerungseinrichtung mit den Merkmalen des Anspruchs 1, eine Zerkleinerungswalze mit den Merkmalen des Anspruchs 10 sowie ein Tellerelement mit den Merkmalen des Anspruchs 11 gelöst. Vorteilhafte Ausgestaltungen sind in den Unteransprüchen enthalten.

Die erfindungsgemäße Zerkleinerungseinrichtung für Erntegut enthält zwei gegenläufig antreibbare Zerkleinerungswalzen, welche jeweils in Axialrichtung eine gewellte Mantelfläche bzw. ein Wellenprofil aufweisen und ineinandergreifend angeordnet sind. Das heißt, dass die Spitzen der Wellen der einen Zerkleinerungswalze in die Täler der Wellen der anderen Zerkleinerungswalze eingreifen und umgekehrt. Das Wellenprofil erstreckt sich vorteilhafterweise jeweils über die gesamte wirksame axiale Länge der Zerkleinerungswalzen, obwohl dies nicht zwingend der Fall sein muss. Ferner sind die Wellentäler und -berge vorzugsweise kreisförmig um die Drehachse umlaufend ausgebildet, so dass die Mantelfläche insgesamt rotationssymmetrisch ist.

Die Erfindung betrifft also eine Zerkleinerungseinrichtung für Erntegut, welche zwei gegenläufig antreibbare Zerkleinerungswalzen aufweist, die jeweils in Axialrichtung eine gewellte Mantelfläche haben und ineinandergreifend angeordnet sind. Des Weiteren befinden sich bei dieser Zerkleinerungseinrichtung in den Wellenflanken mindestens einer Zerkleinerungswalze im Wesentlichen radial verlaufende Einkerbungen, wobei der Querschnitt mindestens einer dieser Einkerbungen variiert. Der "Querschnitt" der Einkerbung wird dabei definitionsgemäß (d. h. rechtwinklig) zur Verlaufsrichtung der Einkerbung angesetzt. Die Variation des Querschnitts bedeutet, dass dieser an mindestens zwei verschiedenen Positionen entlang der Einkerbung (d. h. bei mindestens zwei verschiedenen Radien in Bezug auf die Achse der Zerkleinerungswalze) unterschiedlich ist. Die Zerkleinerungsleistung der Einrichtung kann durch einen solchen veränderlichen Querschnitt den Arbeitsbedingungen beim jeweiligen Walzenradius optimal angepasst werden.

Die variierende Einkerbung weist eine Schneidkante auf, welche im Bereich kleiner Radien an einer (in Laufrichtung der Zerkleinerungswalze gesehen) anderen Seite liegt als im Bereich großer Radien, wobei sich die genannten Radien jeweils auf die Drehachse der Zerkleinerungswalze beziehen. Die Schneidkante ist vorzugsweise spitzwinklig geformt, um eine entsprechende Schärfe zu erlangen. Durch den Seitenwechsel der Schneidkante wird ermöglicht, dass die an einem Punkt schneller umlaufende Zerkleinerungswalze und die kooperierende, langsamer umlaufende Zerkleinerungswalze gemeinsam eine scherenähnliche Schneidwirkung erzeugen.

Die im Querschnitt variable Einkerbung kann in einem Bereich mittlerer Radien eine Unterbrechung aufweisen. Dies bedeutet, dass der Querschnitt der Einkerbung im Bereich dieser mittleren Radien (zumindest näherungsweise) den Flächeninhalt Null hat bzw. zu einem Strich wird. Besonders bevorzugt ist es dabei, wenn Einkerbungen an beiden Zerkleinerungswalzen mit derartigen Unterbrechungen versehen sind und sich diese Unterbrechungen berühren. Weiterhin ist es besonders bevorzugt, wenn die Zerkleinerungswalzen mit mindestens einem Antrieb derart gekoppelt sind, dass sie im Bereich der Unterbrechungen der Einkerbungen mit im Wesentlichen derselben Umfangsgeschwindigkeit antreibbar sind. Mit anderen Worten liegt die Zone, in der einander berührende Punkte der gegenläufig angetriebenen Zerkleinerungswalzen in etwa die gleiche Umlaufgeschwindigkeit haben (eine solche Zone gibt es in der Regel bei jeder gattungsgemäßen Zerkleinerungseinrichtung) genau dort, wo die Einkerbungen unterbrochen sind. In diesen Zonen kann sich daher kein Erntegut in irgendwelchen Hohlräumen von Einkerbungen aufhalten. Letzteres ist bei bekannten Zerkleinerungseinrichtungen möglich und führt dort aufgrund der gegen Null gehenden Relativgeschwindigkeit zwischen den Zerkleinerungswalzen zu einer schlechten Zerkleinerungswirkung und unzerteiltem Erntegut.

Nachfolgend werden Weiterbildungen der Erfindung beschrieben, welche in ähnlicher Weise auch in der DE 101 51 246 B4 offenbart sind.

So können bei der Zerkleinerungseinrichtung die Zerkleinerungswalzen unterschiedliche mittlere, minimale und/oder maximale Radien haben. Auf diese Weise kann durch verschiedene Umfangsgeschwindigkeiten ein verbesserter Reibaufschluss von Erntegut erzielt werden.

Gemäß einer anderen Weiterbildung sind die Zerkleinerungswalzen mit mindestens einem Antrieb derart gekoppelt, dass sie mit unterschiedlicher Drehzahl antreibbar sind. Die Einstellung unterschiedlicher Drehzahlen erlaubt es, dafür zu sorgen, dass sich berührende Punkte auf den Oberflächen der Walzen unterschiedliche Umfangsgeschwindigkeiten haben, was ebenfalls zu einem verbesserten Reibaufschluss des Erntegutes führt.

Zur Vereinfachung der Konstruktion werden die Zerkleinerungswalzen vorzugsweise beide von demselben Antrieb (Motor) angetrieben, wobei die Übertragung des Antriebs auf die Walzen jedoch mit unterschiedlichen Übersetzungsverhältnissen erfolgt.

Die Wellenflanken der Zerkleinerungswalzen können in sich noch einmal profiliert sein, zum Beispiel durch radial verlaufende Einkerbungen. Durch die Profilierung kann ein starker Reißeffekt auf das Erntegut ausgeübt werden, so dass eine noch bessere Zerkleinerungswirkung erreicht wird.

Gemäß der Erfindung sind die Zerkleinerungswalzen aus in Axialrichtung gestapelten Tellerelementen aufgebaut, wobei jedes Tellerelement vorzugsweise eine Welle des Wellenprofils der Zerkleinerungswalze bildet. Ein solcher modularer Aufbau aus Tellerelementen lässt sich einerseits gut herstellen und gewährleistet andererseits, dass defekte Tellerelemente leicht gegen neue ausgetauscht werden können, so dass bei einem lokalen Schaden nicht die gesamte Zerkleinerungswalze verworfen werden muss.

Bei einer anderen Weiterbildung der Erfindung ist mindestens eine der Zerkleinerungswalzen in radialer Richtung verschiebebeweglich oder schwenkbar gelagert. Hierdurch ist es möglich, dass sich durch ein Ausschwenken der Zerkleinerungswalze in radialer Richtung der Reibspalt zwischen den Zerkleinerungswalzen vergrößert, um zum Beispiel einen harten Fremdkörper zwischen den Walzen passieren zu lassen. Typischerweise wird die verschiebebewegliche Zerkleinerungswalze mit Hilfe einer Feder unter einer vorgegebenen Spannung in radialer Richtung bis auf eine minimale Spaltbreite gegen die andere Walze gedrückt.

Ferner betrifft die Erfindung eine Zerkleinerungswalze für eine Zerkleinerungseinrichtung der oben beschriebenen Art, d. h. eine Zerkleinerungswalze, welche in Axialrichtung eine gewellte Mantelfläche bzw. ein Wellenprofil aufweist. Bevorzugte Ausgestaltungen der Zerkleinerungswalze ergeben sich aus der obigen Beschreibung der Zerkleinerungseinrichtung.

Des Weiteren betrifft die Erfindung Tellerelemente für eine Zerkleinerungswalze der vorstehend beschriebenen Art.

Im Folgenden wird die Erfindung mit Hilfe der Figuren beispielhaft erläutert, wobei die Ausführungsformen nach den Figuren 1 bis 3 nicht unter die Ansprüche fallen und die Figuren 4 bis 7 erfindungsgemäße Ausführungsformen zeigen. Es zeigt:
- Fig. 1: eine Aufsicht (links) und eine perspektivische Ansicht (rechts) der beiden Zerkleinerungswalzen einer Zerkleinerungseinrichtung;
- Fig. 2: ein profiliertes Tellerelement der ersten Zerkleinerungswalze von Fig. 1 mit teilweise konkavem Wellen profi I in einer Aufsicht (links), einem seitlichen Querschnitt (rechts), und einer Vergrößerung des seitlichen Querschnitts (Mitte);
- Fig.3: ein profiliertes Tellerelement der zweiten Zerkleinerungswalze von Fig. 1 mit teilweise konvexem Wellenprofil in einer Aufsicht (links), einem seitlichen Querschnitt (rechts), und einer Vergrößerung des seitlichen Querschnitts (Mitte);
- Fig.4: eine Aufsicht auf die beiden Zerkleinerungswalzen einer Zerkleinerungseinrichtung gemäß einer Ausführungsform der Erfindung;
- Fig. 5: ein profiliertes Tellerelement der ersten Zerkleinerungswalze von Figur 4 mit teilweise konkaven Wellenprofil in einer Seitenansicht (links), einer Aufsicht (Mitte), und einer perspektivischen Ansicht (rechts);
- Fig. 6: ein profiliertes Tellerelement der zweiten Zerkleinerungswalze von Figur 4 mit teilweise konvexem Wellenprofil in einer Seitenansicht (links), einer Aufsicht (Mitte) und einer perspektivischen Ansicht (rechts);
- Fig. 7: einen Schritt entlang der Linie VII-VII durch eine radial außen gelegene Einkerbung des Tellerelementes von Figur 6.

Gleiche Bezugszeichen oder sich um 100 unterscheidende Bezugszeichen betreffen in den Figuren gleiche oder ähnliche Komponenten.

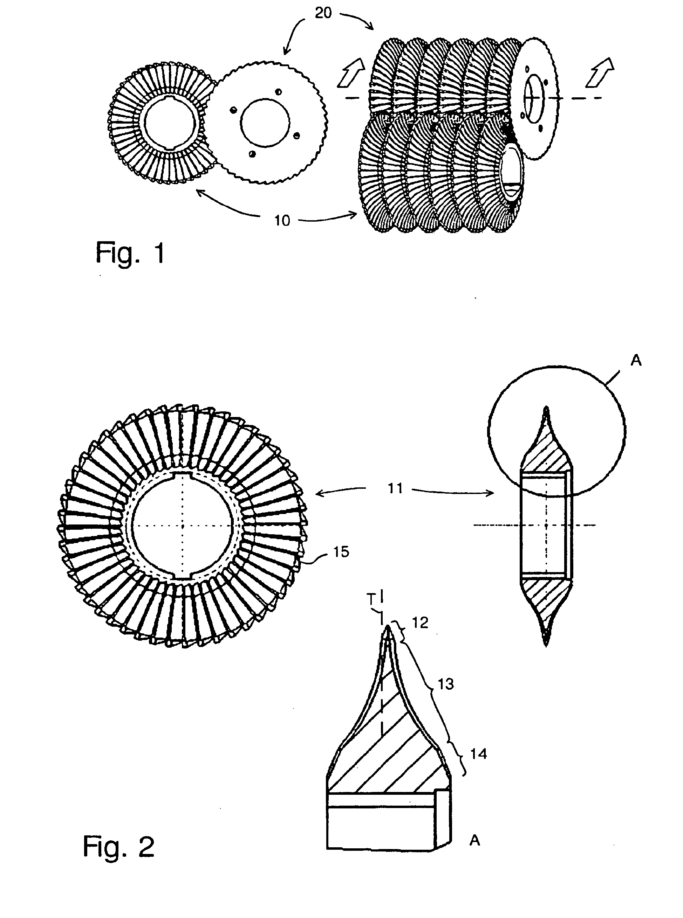

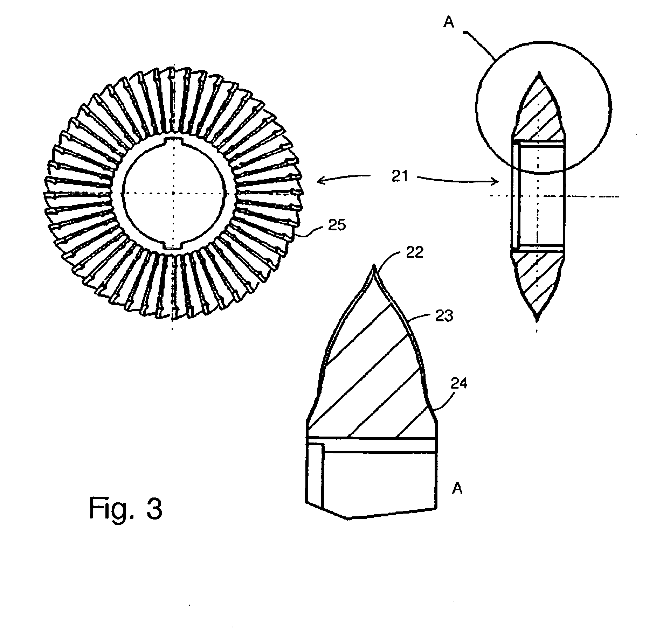

In den Figuren 1 bis 3 ist eine Zerkleinerungseinrichtung für Erntegut wie beispielsweise Mais dargestellt. Kernbestandteil dieser Einrichtung sind die in Figur 1 erkennbaren zwei Zerkleinerungswalzen 10, 20, welche von geeigneten Komponenten (nicht dargestellt) gegenläufig angetrieben werden. Blockpfeile deuten an, dass (zumindest) die Zerkleinerungswalze 20 in Radialrichtung verschiebebeweglich gelagert ist. Hierdurch ist es möglich, dass diese Walze 20 bei Eindringen eines Fremdkörpers in den Reibspalt radial ausweichen kann, um eine größere Beschädigung der Zerkleinerungswalzen durch den Fremdkörper zu vermeiden. Des Weiteren sind die Zerkleinerungswalzen 10, 20 aus einzelnen Tellerelementen 11, 21 (Figur 2, 3) zusammengesetzt. Eine detaillierte Erläuterung der grundsätzlichen Funktionsweise derartiger Zerkleinerungswalzen findet sich im Übrigen beispielsweise in der DE 101 51 246 B4.

Der entscheidende Unterschied zwischen dem Stand der Technik und der dargestellten Zerkleinerungseinrichtung ist in den Figuren 2 und 3 erkennbar. Danach bestehen die als Reibflächen wirksamen Wellenflanken aus einer Mischform von geraden Abschnitten an den Enden und einem gekrümmten Anschnitt in der Mitte.

Bei den Tellerelementen 11 der ersten Zerkleinerungswalze 10 folgt konkret auf einen radial äußeren geraden Abschnitt 12 an der Wellenberg-Spitze der möglichst lange konkave (d. h. nach innen gekrümmte) Abschnitt 13 , welcher wiederum von einem geraden Abschnitt 14 zum Boden des Wellentals hin abgeschlossen wird. In der Vergrößerung von Figur 2 ist erkennbar, dass die Tangente T an das radial äußere Ende des gekrümmten Abschnitts 13 radial verläuft, d. h. eine weitere Krümmung würde eine "überhängende" Wellenflanke erzeugen.

Bei den Tellerelementen 21 der zweiten Zerkleinerungswalze 20 folgt auf einen radial äußeren geraden Abschnitt 22 an der Wellenberg-Spitze der möglichst lange konvexe (d. h. nach außen gekrümmte) Abschnitt 23, welcher wiederum von einem geraden Abschnitt 24 zum Boden des Wellentals hin abgeschlossen wird.

Die Wellenflanken an den Tellerelementen 11, 21 sind dabei im Wesentlichen komplementär zueinander ausgebildet, um einen gleichmäßig breiten Reibspalt zwischen den Zerkleinerungswalzen 10, 20 zu gewährleisten. Ferner weisen die Tellerelemente 11, 21 in den Wellenflanken eine Profilierung auf, welche durch radial verlaufende Einkerbungen 15, 25 gebildet wird.

Eine Zerkleinerungseinrichtung der in den Figuren dargestellten Art lässt sich beispielsweise zur Zerkleinerung von Maiskörnern in einem Maishäcksler einsetzen.

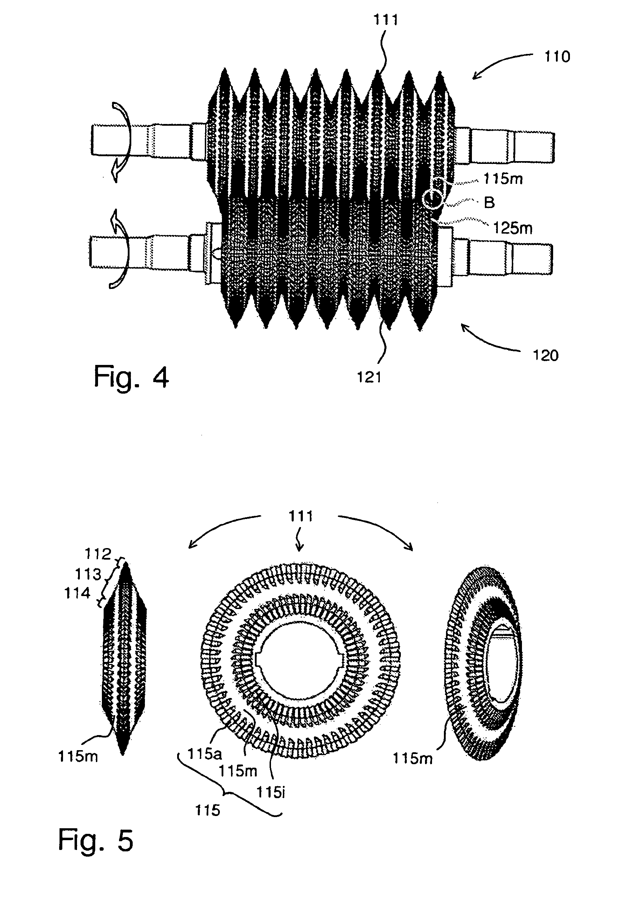

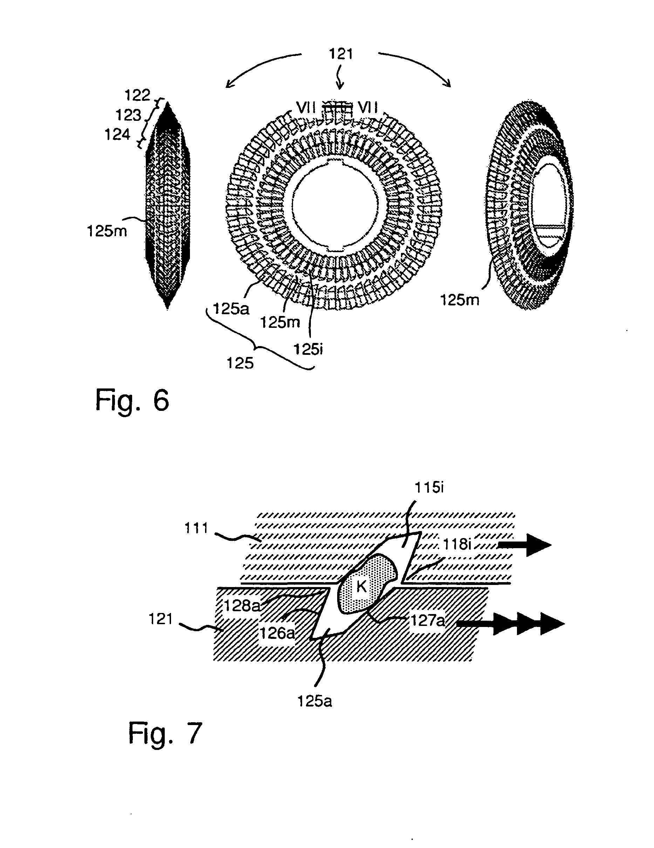

In den Figuren 4 bis 7 ist eine Ausführung einer erfindungsgemäßen Zerkleinerungseinrichtung dargestellt. Diese Zerkleinerungseinrichtung umfasst zwei gegenläufig angetriebene Zerkleinerungswalzen 110 und 120, die aus einzelnen Tellerelementen 111 bzw. 121 bestehen. Des Weiteren sind auch hier die Tellerelemente 111 der ersten Zerkleinerungswalze 110 mit Wellenflanken versehen, welche radial außen und radial innen gerade Abschnitte 112 bzw. 114 und dazwischen einen konkav gekrümmten Abschnitt 113 aufweisen (Figur 5). In ähnlicher Weise sind die Tellerelemente 121 der zweiten Zerkleinerungswalze 120 mit Wellenflanken ausgestattet, welche radial außen und radial innen gerade Abschnitte 122 bzw. 124 und dazwischen einen konvex gekrümmten Abschnitt 123 aufweisen (Figur 6). Die nachfolgend beschriebene Besonderheit dieser Ausführungsform ist jedoch von einer solchen Formgebung unabhängig und würde genauso beispielsweise bei kegelförmigen Tellerelementen (mit ungekrümmten Wellenflanken) erreicht.

Der wesentliche Unterschied zur ersten Ausführungsform liegt in der Profilierung, d. h. den Einkerbungen 115 bzw. 125 auf den Wellenflanken der Tellerelemente 111 bzw. 121. Diese Einkerbungen 115 bzw. 125 haben im Bereich eines mittleren Radius (gemessen von der Drehachse der Tellerelemente aus) eine Unterbrechung 115m bzw. 125m. Mit anderen Worten gibt es in dieser Zone des mittleren Radius keine Einkerbungen bzw. eine Einkerbung der Tiefe Null.

Wie aus dem eingekreisten Bereich B in Figur 4 erkennbar ist, sind die Einkerbungs-Unterbrechungen 115m und 125m gerade so angeordnet, dass sie sich bei den fertig montierten, ineinandergreifenden Zerkleinerungswalzen gegenüberliegen bzw. berühren. Des Weiteren sind die Antriebsdrehzahlen der beiden Zerkleinerungswalzen 110, 120 im bevorzugten Betrieb gerade so eingestellt, dass die Umlaufgeschwindigkeit der Tellerelemente 111 und 121 im Berührungsbereich B der Unterbrechungen 115m, 125m in etwa gleich groß sind. Allgemein ist der relative Unterschied zwischen den Umlaufgeschwindigkeiten der Zerkleinerungswalzen 110, 120 an der Spitze eines Tellerelementes am größten.

Zu kleineren Radien hin nimmt er immer mehr ab, wobei er in der Berühungszone B der Einkerbungs-Unterbrechungen sein Vorzeichen wechselt. Im Bereich B der annähernd gleichen Umlaufgeschwindigkeiten tritt keine Reißwirkung ein, so dass die Zerkleinerungsleistung hier schlecht ist und gerade kleineres Erntegut (z. B. Getreidekörner) diese Zone bei herkömmlichen Profilierungen häufig unzerkleinert passieren kann. Um dies zu verhindern, sind bei den Zerkleinerungswalzen 110, 120 die Profilierungen in der Zone gleicher Umlaufgeschwindigkeiten unterbrochen, so dass hier kein Platz für unzerteiltes, bloß mitgeschlepptes Erntegut vorhanden ist.

Eine zweite Besonderheit der Profilierungen an den Zerkleinerungswalzen 110, 120 besteht darin, dass die radial innen gelegenen Abschnitte 115i bzw. 125i der Einkerbungen gegenläufig bzw. spiegelbildlich ausgebildet sind zu den radial außen gelegenen Abschnitten 115a bzw. 125a der Einkerbungen.

Figur 7 zeigt diesbezüglich einen Querschnitt durch einen äußeren Einkerbungs-Abschnitt 125a entlang der Linie VII-VII von Figur 6. Des Weiteren ist der zugehörige Querschnitt durch den inneren Einkerbungs-Abschnitt 115i des gegenüberliegenden Tellerelementes 111 mit dargestellt. Die radial außen liegende Einkerbung 125a des Tellerelementes 121 weist einen im Wesentlichen dreieckigen oder trapezförmigen Querschnitt auf, wobei sie eine überhängende Flanke 126a und eine flache Flanke 127a besitzt. Die überhängende Flanke 126a bildet mit der "normalen" Oberfläche des Tellerelementes eine spitzwinklige Schneidkante 128a.

Die am anderen Tellerelement 111 befindliche, radial innere Einkerbung 115i hat einen ähnlichen Querschnitt, wobei jedoch die Schneidkante 118i an der in Umlaufrichtung (Pfeile) anderen Seite ausgebildet ist. Die mit Pfeilen angedeutete größere Umlaufgeschwindigkeit des Tellerelementes 111 im Vergleich zur Umlaufgeschwindigkeit des Tellerelementes 111 führt nun dazu, dass ein in den Einkerbungen liegendes Korn K von den beiden Schneidkanten 118i und 128a ähnlich wie bei einer Schere zuschnitten wird.

Bei den radial inneren Einkerbungen 125i und den zugehörigen radial äußeren Einkerbungen 115a kehrt sich die Situation von Figur 7 dahingehend um, dass dort das Tellerelement 111 die größere Umlaufgeschwindigkeit hat. Um trotzdem die beschriebene Scherenwirkung zu erzielen, sind daher die Schneidkanten in diesen Abschnitten 125i und 115a der Einkerbungen spiegelbildlich, d. h. an den in Umlaufrichtung anderen Seiten der Einkerbungen angeordnet.

Wie schon erwähnt sind im Bereich mittlerer Radien die Umlaufgeschwindigkeiten beider Zerkleinerungswalzen etwa gleich groß, so dass Körner dort nicht zerrieben oder zerschnitten werden können. Daher haben die Einkerbungen in diesem Bereich Unterbrechungen 115m, 125m, die ein Mitschleppen von Erntegut verhindern.

Die beschriebenen Zerkleinerungseinrichtungen garantieren eine sichere Zerkleinerung von allen Arten von Getreidekörnern, Mais oder sonstigen Hülsenfrüchten wie beispielsweise Ackerbohnen, Erbsen, Raps oder dergleichen.

### Bezugszeichenliste:

- 10, 110: erste Zerkleinerungswalze
- 11, 111: Tellerelement der ersten Zerkleinerungswalze
- 12, 112: radial äußerer gerader Abschnitt
- 13, 113: konkaver Abschnitt
- 14, 114: radial innerer gerader Abschnitt
- 15, 115: Einkerbung
- 115i: radial innen gelegene Einkerbung
- 115m: bei mittlerem Radius gelegene Unterbrechung der Einkerbung
- 115a: radial außen gelegene Einkerbung
- 118i: Schneidkante
- 20, 120: zweite Zerkleinerungswalze
- 21, 121: Tellerelement der zweiten Zerkleinerungswalze
- 22, 122: radial äußerer gerader Abschnitt
- 23, 123: konvexer Abschnitt
- 24, 124: radial innerer gerader Abschnitt
- 25, 125: Einkerbung
- 125i: radial innen gelegene Einkerbung
- 125m: bei mittlerem Radius gelegene Unterbrechung der Einkerbung
- 125a: radial außen gelegene Einkerbung
- 126a: überhängende Flanke der Einkerbung
- 127a: flache Flanke der Einkerbung
- 128a: Schneidkante

## Patentansprüche

1. Zerkleinerungseinrichtung für Erntegut, enthaltend zwei gegenläufig antreibbare und aus in Axialrichtung gestapelten Tellerelementen (111, 121) bestehenden Zerkleinerungswalzen (110, 120), welche jeweils in Axialrichtung eine gewellte Mantelfläche aufweisen und ineinandergreifend angeordnet sind, wobei die Wellenflanken mindestens einer Zerkleinerungswalze (110, 120) im Wesentlichen radial verlaufende Einkerbungen (115, 125) mit variierendem Querschnitt und einer Schneidkante (118i, 128a) aufweisen, **dadurch gekennzeichnet, dass** die Schneidkante (118i, 128a) im Bereich kleiner Radien in Laufrichtung der Zerkleinerungswalze (110, 120) gesehen an einer anderen Seite der Einkerbung liegt als im Bereich großer Radien, wobei sich die Radien jeweils auf die Drehachse der Zerkleinerungswalze (110, 120) beziehen.

2. Zerkleinerungseinrichtung nach Anspruch 1, **dadurch gekennzeichnet, dass** die Schneidkante (118i, 128a) spitzwinklig ist.

3. Zerkleinerungseinrichtung nach Anspruch 1 oder 2, **dadurch gekennzeichnet, dass** die variierende Einkerbung (115, 125) in einem Bereich mittlerer Radien eine Unterbrechung (115m, 125m) aufweist.

4. Zerkleinerungseinrichtung nach Anspruch 3, **dadurch gekennzeichnet, dass** sich die Unterbrechungen (115m, 125m) von Einkerbungen (115, 125) beider Zerkleinerungswalzen (110,120) berühren.

5. Zerkleinerungseinrichtung nach Anspruch 4, **dadurch gekennzeichnet, dass** die Zerkleinerungswalzen (110, 120) mit mindestens einem Antrieb derart gekoppelt sind, dass sie im Bereich (B) der Unterbrechungen (115m, 125m) von Einkerbungen mit im Wesentlichen derselben Umfangsgeschwindigkeit antreibbar sind.

6. Zerkleinerungseinrichtung nach mindestens einem der Ansprüche 1 bis 5, **dadurch gekennzeichnet, dass** die Zerkleinerungswalzen (110,120) mit mindestens einem Antrieb derart gekoppelt sind, dass sie mit unterschiedlicher Drehzahl antreibbar sind.

7. Zerkleinerungseinrichtung nach mindestens einem der Ansprüche 1 bis 6, **dadurch gekennzeichnet, dass** die Zerkleinerungswalzen (110, 120) unterschiedliche mittlere, minimale und/oder maximale Radien haben.

8. Zerkleinerungseinrichtung nach mindestens einem der Ansprüche 1 bis 7, **dadurch gekennzeichnet, dass** jedes Tellerelement (111, 121) eine Welle des Wellenprofils der Zerkleinerungswalze (110, 120) bildet.

9. Zerkleinerungseinrichtung nach mindestens einem der Ansprüche 1 bis 8, **dadurch gekennzeichnet, dass** mindestens eine der Zerkleinerungswalzen (110, 120) in radialer Richtung verschiebebeweglich oder schwenkbar gelagert ist.

10. Zerkleinerungswalze (110, 120) für eine Zerkleinerungseinrichtung nach mindestens einem der Ansprüche 1 bis 9.

11. Tellerelement (111, 121) für eine Zerkleinerungswalze (110, 120) nach Anspruch 10.

## Claims

1. Comminuting device for crop, containing two comminuting rollers (110, 120) which can be driven in opposite directions and consist of plate elements (111, 121) stacked in the axial direction, which comminuting rollers (110, 120) in each case have a lateral surface which is fluted in the axial direction and are located so as to mesh with one another, the flute flanks of at least one comminuting roller (110, 120) having substantially radially running notches (115, 125) with varying cross section and a cutting edge (118i, 128a), **characterized in that** the cutting edge (118i, 128a) in the region of small radii, when viewed in the running direction of the comminuting roller (110, 120), lies on a different side of the notch than in the region of large radii, the radii in each case relating to the rotation axle of the comminuting roller (110, 120).

2. Comminuting device according to Claim 1, **characterized in that** the cutting edge (118i, 128a) is acute-angled.

3. Comminuting device according to Claim 1 or 2, **characterized in that** the varying notch (115, 125) in a region of medial radii has an interruption (115m, 125m).

4. Comminuting device according to Claim 3, **characterized in that** the interruptions (115m, 125m) of notches (115, 125) of both comminuting rollers (110, 120) contact one another.

5. Comminuting device according to Claim 4, **characterized in that** the comminuting rollers (110, 120) are coupled to at least one drive in such a manner that they can be driven at the substantially same circumferential speed in the region (B) of the interruptions (115m, 125m) of notches.

6. Comminuting device according to at least one of Claims 1 to 5, **characterized in that** the comminuting rollers (110, 120) are coupled to at least one drive in such a manner that they can be driven at different rotational speeds.

7. Comminuting device according to at least one of Claims 1 to 6, **characterized in that** the comminuting rollers (110, 120) have different medial, minimal and/or maximal radii.

8. Comminuting device according to at least one of Claims 1 to 7, **characterized in that** each plate element (111, 121) forms one flute of the fluted profile of the comminuting roller (110, 120).

9. Comminuting device according to at least one of Claims 1 to 8, **characterized in that** at least one of the comminuting rollers (110, 120) is mounted so as to be displaceably movable or pivotable in the radial direction.

10. Comminuting roller (110, 120) for a comminuting device according to at least one of Claims 1 to 9.

11. Plate element (111, 121) for a comminuting roller (110, 120) according to Claim 10.

## Revendications

1. Dispositif broyeur pour récolte, comprenant deux rouleaux broyeurs (110, 120) pouvant être entraînés en sens inverse et constitués d'éléments de plateaux (111, 121) empilés dans la direction axiale, lesquels rouleaux broyeurs présentent chacun une surface d'enveloppe ondulée dans la direction axiale et sont disposés de manière à s'engager l'un dans l'autre, les flancs ondulés d'au moins un rouleau broyeur (110, 120) présentant des encochages (115, 125) s'étendant essentiellement radialement, de section transversale variable, et une arête de coupe (118i, 128a), **caractérisé en ce que** l'arête de coupe (118i, 128a) se situe dans la région de petits rayons, vu dans la direction d'avance du rouleau broyeur (110, 120), sur un autre côté de l'encochage par rapport à la région de grands rayons, les rayons se rapportant à chaque fois à l'axe de rotation du rouleau broyeur (110, 120).

2. Dispositif broyeur selon la revendication 1, **caractérisé en ce que** l'arête de coupe (118i, 128a) est à angle aigu.

3. Dispositif broyeur selon la revendication 1 ou 2, **caractérisé en ce que** l'encochage variable (115, 125) dans une région de rayons moyens présente une interruption (115m, 125m).

4. Dispositif broyeur selon la revendication 3, **caractérisé en ce que** les interruptions (115m, 125m) d'encochages (115, 125) des deux rouleaux broyeurs (110, 120) sont en contact les unes avec les autres.

5. Dispositif broyeur selon la revendication 4, **caractérisé en ce que** les rouleaux broyeurs (110, 120) sont accouplés à au moins un entraînement, de telle sorte qu'ils puissent être entraînés dans la région (B) des interruptions (115m, 125m) d'encochages avec essentiellement la même vitesse périphérique.

6. Dispositif broyeur selon au moins l'une quelconque des revendications 1 à 5, **caractérisé en ce que** les rouleaux broyeurs (110, 120) sont accouplés à au moins un entraînement, de telle sorte qu'ils puissent être entraînés avec une vitesse de rotation différente.

7. Dispositif broyeur selon au moins l'une quelconque des revendications 1 à 6, **caractérisé en ce que** les rouleaux broyeurs (110, 120) présentent des rayons centraux, minimaux et/ou maximaux différents.

8. Dispositif broyeur selon au moins l'une quelconque des revendications 1 à 7, **caractérisé en ce que** chaque élément de plateau (111, 121) forme une ondulation du profilé ondulé du rouleau broyeur (110, 120).

9. Dispositif broyeur selon au moins l'une quelconque des revendications 1 à 8, **caractérisé en ce qu'**au moins l'un des rouleaux broyeurs (110, 120) est monté de manière pivotante ou déplaçable dans la direction radiale.

10. Rouleau broyeur (110, 120) pour un dispositif broyeur selon au moins l'une quelconque des revendications 1 à 9.

11. Élément de plateau (111, 121) pour un rouleau broyeur (110, 120) selon la revendication 10.
